(19) Europäisches Patentamt
European Patent Office
Office européen des brevets

(11) **EP 4 200 177 B1**

(12) **EUROPEAN PATENT SPECIFICATION**

(45) Date of publication and mention
of the grant of the patent:
**25.06.2025 Bulletin 2025/26**

(21) Application number: **21769658.2**

(22) Date of filing: **20.08.2021**

(51) International Patent Classification (IPC):
**B60W 30/18** (2012.01)    **B60W 50/00** (2006.01)

(52) Cooperative Patent Classification (CPC):
**B60W 30/18063; B60W 2050/0033;**
B60W 2050/0034; B60W 2520/14; B60W 2520/28;
B60W 2710/207; B60W 2720/28; B60W 2720/406

(86) International application number:
**PCT/EP2021/073196**

(87) International publication number:
**WO 2022/038286 (24.02.2022 Gazette 2022/08)**

(54) **APPARATUS AND METHOD FOR CONTROLLING A PROCESS**

VORRICHTUNG UND VERFAHREN ZUR STEUERUNG EINES PROZESSES

APPAREIL ET PROCÉDÉ PERMETTANT DE COMMANDER UN PROCESSUS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.08.2020   GB 202013064**

(43) Date of publication of application:
**28.06.2023   Bulletin 2023/26**

(73) Proprietor: **Jaguar Land Rover Limited
Coventry, Warwickshire CV3 4LF (GB)**

(72) Inventor: **HERRERA, Juan
Coventry Warwickshire CV3 4lf (GB)**

(74) Representative: **Jaguar Land Rover Patents
Department
Patents Department W/1/073
Abbey Road, Whitley
Coventry CV3 4LF (GB)**

(56) References cited:
**US-A1- 2002 143 451    US-B1- 10 407 035**

## Description

### TECHNICAL FIELD

The present invention relates to a control system and a corresponding method and computer software.

### BACKGROUND

It is necessary in many applications to control a process. For example, US 2002/0143451 A1 and US 10,407,035 B1 control the motion of vehicles. In general, the process is controlled to achieve a desired state, such as a desired temperature. An example of a process which may be controlled is a vehicle. One or more aspects of the vehicle may be controlled, such as a speed of the vehicle and a steering of the vehicle. The vehicle may be controlled to achieve a desired state from a current state of the vehicle. The current and desired states may be defined by one or more parameters of the vehicle such as a heading and a position of the vehicle.

Some control schemes are only reactive to a measured state of the process such as Proportional-Integral-Derivative (PID) control schemes. Model Predictive Control (MPC) control schemes are also known which aim to achieve the desired state of the process based on the current state by predicting one or more future states of the process. MPC control is based on a model of the process under control and information about the current state of the process.

For controlling a vehicle using a model to represent the vehicle, such as in the MPC scheme, a velocity of the vehicle can have a large influence on the control of the vehicle. In particular, it has been observed that, particularly in the MPC scheme, when the velocity of the vehicle is low an accuracy of the control scheme may be reduced.

It is an object of embodiments of the invention to at least mitigate one or more of the problems of the prior art.

It is an aim of the present invention to address one or more of the disadvantages associated with the prior art.

### SUMMARY OF THE INVENTION

Aspects and embodiments of the invention provide a control system, a vehicle control system, a vehicle, a method and computer software as claimed in the appended claims.

According to an aspect of the present invention, there is provided a control system comprising one or more controllers, the control system comprising input means to velocity data indicative of a determined respective velocity of each of first and second lateral sides of the vehicle and processing means configured to determine a control input for the vehicle in dependence on the velocity data utilising a model indicative of movement of the vehicle in dependence on a respective velocity of each of the first and second lateral sides of the vehicle. Advantageously use of the velocity data to determine the control input may provide improved control.

According to an aspect of the present invention, there is provided a control system comprising one or more controllers, the control system comprising input means to receive state data indicative of a current state of a vehicle and velocity data indicative of a determined respective velocity of each of first and second lateral sides of the vehicle, memory means storing data indicative of a model associated with the vehicle, processing means configured to determine a control input for the vehicle in dependence on the state data and the velocity data utilising a model indicative of movement of the vehicle in dependence on a respective velocity of each of the first and second lateral sides of the vehicle, and output means arranged to output one or more signals indicative of the control input for controlling the vehicle. Advantageously use of the velocity data to determine the control input may provide improved control at low speed of the vehicle.

The input mean may comprise an electrical input of the one or more controllers. The memory means may be one or more memory devices. The processing means may comprise one or more processing devices. The output means may comprise a electrical output of the one or more controllers.

The processing means may be arranged to utilise the state data and the velocity data as an input for the model to determine the control input for the vehicle. Advantageously the model is provided with the state data and the velocity data to determine the control input.

The processing means may be arranged to determine an output of the model indicative of a desired velocity of the first and second lateral sides of the vehicle and to determine the control input in dependence thereon. Advantageously the output of the model is indicative of the control input for the vehicle.

Optionally the velocity data is indicative of the determined respective velocity of each of the first and second lateral sides of the vehicle at a lateral cross section of the vehicle. Advantageously the velocity along the lateral cross section of the vehicle is utilised.

The velocity data is optionally indicative of the determined respective velocity of each of first and second ends of an axle of the vehicle. Advantageously the velocity of each of the ends of the axle may be conveniently determined.

The processing means may be arranged to determine an error between the desired velocity of the first and second lateral sides of the vehicle and the velocity data. Advantageously the error is a velocity error.

The processing means may be arranged to apply feedback control to the error to determine the control input for the vehicle. The feedback control enables control of the vehicle to reduce the error.

The processing means may be arranged to perform a conversion operation on the control input to determine an actuation control input indicative of a state of one or more control actuators associated with the vehicle as the control input. Advantageously the actuation control input may be used to control the one or more actuators.

In some embodiments, actuation control input for the vehicle is arranged to control a steering angle of the vehicle. Advantageously the steering angle is convenient to control the vehicle.

The velocity data may be indicative of a determined respective velocity of each of first and second lateral sides of the vehicle at first and second positions along a longitudinal axis of the vehicle. Advantageously the velocity data may relate to more than one position along the longitudinal axis.

According to the invention, the processing means is arranged to determine the control input for the vehicle in dependence on the velocity data utilising the model indicative of movement of the vehicle, as a first model, in dependence on a respective velocity of each of the first and second lateral sides of the vehicle at the first position along the longitudinal axis, and a second model indicative of movement of the vehicle in dependence on a respective velocity of each of the first and second lateral sides of the vehicle at the second position along the longitudinal axis. Advantageously the vehicle may be controlled at first and second positions in dependence on the first and second models.

The processing means may be arranged to determine a first control input utilising the first model indicative of movement of the vehicle in dependence on a respective velocity of each of the first and second lateral sides of the vehicle at the first position along the longitudinal axis. Advantageously the first control input may be used to control the vehicle at the first position.

The processing means may be arranged to determine a second control input utilising the second model indicative of movement of the vehicle in dependence on a respective velocity of each of the first and second lateral sides of the vehicle at the second position along the longitudinal axis. Advantageously the first control input may be used to control the vehicle at the second position.

The processing means may be arranged to combine the first and second control inputs to determine the control input for the vehicle. Advantageously the control inputs are combined to form a single control input for the vehicle.

The combining of the first and second control inputs optionally comprises determining a respective proportion for each control input. Advantageously the control inputs are determined proportionally to achieve control of the vehicle.

The first and second positions along the longitudinal axis may correspond to first and second axles of the vehicle. Advantageously the vehicle may be conveniently controlled with respect to the first and second axles.

The velocity of each of first and second lateral sides of the vehicle at first and second positions along a longitudinal axis of the vehicle optionally corresponds to a speed of first and second wheels of the first and second axles of the vehicle.

According to an aspect of the present invention, there is provided a vehicle control system, comprising a control system according to any of the above aspects and one or more control means for controlling the vehicle.

The control means may be controlled in dependence on the control input from the control system. The control means comprises one or more actuators. The one or more actuators may control a steering of the vehicle in dependence on the control input. Advantageously the actuators may be used to control the steering.

The vehicle control system optionally comprises velocity determining means for determining velocity data indicative of a respective velocity of each of first and second lateral sides of the vehicle. The velocity determining means may comprise one or more velocity determining devices.

The velocity determining means comprises first and second wheels speed sensors associated with first and second wheels of the vehicle.

The first and second wheels may be laterally spaced. The first and second wheels are optionally associated with an axle of the vehicle.

The vehicle control system may comprising state determining means for determining a current state of the vehicle and providing state data indicative of the current state to the control system.

According to an aspect of the present invention, there is provided a vehicle comprising a control system or a vehicle control system according to any of the above aspects.

According to an aspect of the present invention, there is provided a method of controlling a vehicle, comprising receiving state data indicative of a current state of a vehicle and velocity data indicative of a determined respective velocity of each of first and second lateral sides of the vehicle, determining a control input for the vehicle in dependence on the state data and the velocity data utilising on a model indicative of movement of the vehicle in dependence on a respective velocity of each of the first and second lateral sides of the vehicle, and controlling the vehicle in dependence on the control input.

The method may comprise determining an output of the model indicative of a desired velocity of the first and second lateral sides of the vehicle and determining the control input in dependence thereon.

The method optionally comprises performing a conversion operation on the control input to determine an actuation control input indicative of a state of one or more control actuators associated with the vehicle as the control input.

According to an aspect of the present invention, there is provided computer software which, when executed by a computer, is arranged to perform a method according to an aspect of the present invention. Optionally the computer software is stored on a computer-readable medium. The computer software may be tangibly stored on the computer readable medium.

According to an aspect of the present invention, there is provided a method of controlling a vehicle, comprising determining a speed of the vehicle, selecting a first control scheme for the vehicle when the speed of the vehicle is equal to or above a predetermined threshold and selecting a second control scheme for the vehicle when the speed of the vehicle is below the predetermined threshold, and controlling the vehicle according to the selected control scheme. Advantageously the control scheme may be appropriately selected for the speed of the vehicle.

The second control scheme may comprise determining a control input for the vehicle in dependence on the state data and the velocity data utilising on a model indicative of movement of the vehicle in dependence on a respective velocity of each of the first and second lateral sides of the vehicle.

Any controller or controllers described herein may suitably comprise a control unit or computational device having one or more electronic processors. Thus the system may comprise a single control unit or electronic controller or alternatively different functions of the controller may be embodied in, or hosted in, different control units or controllers. As used herein the term "controller" or "control unit" will be understood to include both a single control unit or controller and a plurality of control units or controllers collectively operating to provide any stated control functionality. To configure a controller, a suitable set of instructions may be provided which, when executed, cause said control unit or computational device to implement the control techniques specified herein. The set of instructions may suitably be embedded in said one or more electronic processors. Alternatively, the set of instructions may be provided as software saved on one or more memory associated with said controller to be executed on said computational device. A first controller may be implemented in software run on one or more processors. One or more other controllers may be implemented in software run on one or more processors, optionally the same one or more processors as the first controller. Other suitable arrangements may also be used.

BRIEF DESCRIPTION OF THE DRAWINGS

One or more embodiments of the invention will now be described, by way of example only, with reference to the accompanying drawings, in which:

Figure 1 shows an illustration of current and desired states of a vehicle;
Figure 2(a) shows an illustration of a vehicle model;
Figure 2(b) illustrates errors associated with controlling a vehicle;
Figure 3 illustrates a vehicle axle according to an embodiment of the invention;
Figure 4 illustrates a control scheme according to an embodiment of the invention;
Figure 5 illustrates a further control scheme according to an embodiment of the invention;
Figure 6 illustrates a system according to an embodiment of the invention;
Figure 7 illustrates a method according to an embodiment of the invention;
Figure 8 illustrates a further method according to an embodiment of the invention; and
Figure 9 illustrates a vehicle according to an embodiment of the invention.

DETAILED DESCRIPTION

Embodiments of the invention will be described with reference to a vehicle and particularly to controlling a trajectory of the vehicle. It will, however, be appreciated that embodiments of the invention are not limited in this respect. Embodiments of the invention may be applied to controlling other aspects of the vehicle and, furthermore, may be applied to controlling processes more generally. In particular embodiments of the invention may be applied to controlling any process.

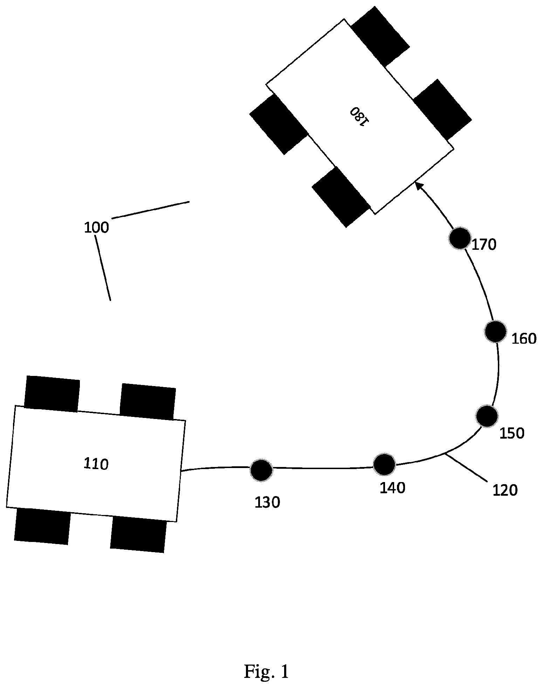

Referring to Figure 1 there is illustrated a vehicle, generally denoted as 100, illustrated at a first state 110. The first state 110 is a current state of the vehicle at a current or present point in time. For example, the current state 110 may be the vehicle 100 at a position on a navigable path, such as a roadway or other navigable area. In addition, a plurality of intended future states or desired states of the vehicle 100 are illustrated along a trajectory 120 of the vehicle 100, each indicated with a respective marker 130, 140, 150, 160, 170, 180. Each of the desired states may be a position of the vehicle 100 along the navigable path in a direction of travel, or at another position on the navigable area, such as at a parked position, for example. Other desired positions of the vehicle 100 may be envisaged. Each of the plurality of future or desired states 130, 140, 150, 160, 170, 180 of the vehicle 100 is defined at respective ones of a plurality of points in time, as will be explained. A respective desired state of the vehicle 100 may be determined for each of the plurality of points in time along the trajectory 120 of the vehicle 100 with respect to the first state 110 of the vehicle 100 such as illustrated in Figure 1. Whilst Figure 1 illustrates six future states 130, 140, 150, 160, 170, 180 of the vehicle 100 it will be appreciated that this is merely illustrative and that other numbers of future states may be envisaged. It will be appreciated that in some embodiments a predetermined number of future states each associated with a respective future point in time are considered up to a horizon, as will be explained.

The first or current state 110 and each of the desired states 130, 140, 150, 160, 170, 180 of the vehicle 100 may each be defined by one or more parameters. The one or more parameters are each indicative of an aspect of the vehicle's state. For example, a first parameter may define the vehicle's position. For a vehicle 100 which travels on the surface of the Earth, including upon water, the position may be defined in two dimensions such as in x, y coordinates. It will be appreciated that for air-going vehicles the position may be defined in three dimensions such as *x, y, z* coordinates. Thus it will be appreciated that one parameter may comprise a plurality of dimensions. Although description is provided herein relating to land-going vehicles, such as wheeled vehicles, it will be appreciated that embodiments of the invention are not limited in this respect. Embodiments of the invention may be envisaged which are aircraft, such as autonomous aircraft, i.e. drones.

The state of the vehicle 100 may also be defined by a heading parameter θ which defines a direction in which the vehicle 100 is facing i.e. oriented. Particularly, although not exclusively, for vehicles not having a front face i.e. which may travel in any direction, θ may indicate the direction of travel of the vehicle 100. The state of the vehicle 100 may be defined by other parameters such as, for example *V* indicative of a velocity of the vehicle 100.

As noted above, in a Model Predictive Control (MPC) control scheme the current state 110 of the vehicle, as defined by $X(k)$, i.e. at time *k,* and one or a plurality of desired states 130, 140, 150, 160, 170, 180, as defined by *Xd,* of the vehicle 100 are used to determine control inputs for the vehicle 100. In some embodiments *Xd* is a vector of a plurality of desired states of the vehicle at respective points in time. Considering discretised time where the current time is *k* and a plurality of future points in time are considered which are defined as *k*+1, *k*+2...*k*+H, where H is a time horizon i.e. a maximum time in advance of the current time for which desired states of the vehicle 100 are considered, control inputs *U* to the vehicle 100 may be determined. In some embodiments *U* is a vector of a plurality of control inputs of the vehicle 100 at respective points in time. Between the current state 110 and the time horizon *H* a predetermined number of desired states 130, 140, 150, 160, 170, 180 may be determined.

Figure 1 indicates a plurality of future states 130, 140, 150, 160, 170, 180 of the vehicle 100. For example, the state 130 may be at time *k*+1, state 140 and time *k*+2 etc. The plurality of future states 130-180 are defined along the trajectory 120 of the vehicle 100.

For a generic process, the state at *k*+1 in a state space representation denoted as $X(k+1)$ is:

$$X(k+1)=A \cdot X(k)+B \cdot U$$

where *U* is the control input provided to the vehicle 100 and A and B are state and input matrices, respectively.

The state at *k*+2 can be given by:

$$X(k + 2) = A \cdot X(k + 1) + B \cdot U(k + 1) = A^2 \cdot X(k) + A \cdot B \cdot U(k) + B \cdot U(k + 1)$$

The above equations can be used to provide an estimate of future states:

$$\begin{bmatrix} X(k + 1) \\ X(k + 2) \\ \vdots \\ X(k + Nx) \end{bmatrix} = \begin{bmatrix} A \\ A^2 \\ \vdots \\ A^{Nx} \end{bmatrix} X(k) + \begin{bmatrix} B & 0 & 0 & \cdots \\ A \cdot B & B & 0 & \cdots \\ \vdots & A \cdot B & B & \cdots \\ \vdots & \vdots & \ddots & \vdots \\ A^{N_x-1} \cdot B & \cdots & \cdots & B \end{bmatrix} \cdot \begin{bmatrix} U(k) \\ U(k + 1) \\ \vdots \\ U(k + Nx - 1) \end{bmatrix}$$

Which gives:

$$X' = Z \cdot X(k) + N \cdot U'$$

Where *X'* is a set of future states of the vehicle 100 and *U'* is a set of control inputs to the vehicle 100. X' and U' define a state of the vehicle 100 and one or more control inputs at each of the plurality of points in time, respectively, Z is a function of A's and *N* is a function of A's and B's as in the estimate of future states, above.

Once the future states $X(k + 1) \dots X(k + Nx)$ of the vehicle 100 are determined, an optimisation step using a cost function $J_k$ may be performed, as shown below:

$$J_k = \frac{1}{2}[X' - Xd]^T Q[X' - Xd] + \frac{1}{2} U'^T R U'$$

T represents matrix transposition, as will be appreciated, and *Q* and *R* are weights which may be diagonal matrices providing a respective weight at each point in time, as below:

$$\begin{bmatrix} Q_k & 0 & 0 & \\ 0 & Q_{k+1} & 0 & \\ 0 & 0 & \ddots & \\ & & & Q_{k+Nx} \end{bmatrix} \quad \begin{bmatrix} R_k & 0 & 0 & \\ 0 & R_{k+1} & 0 & \\ 0 & 0 & \ddots & \\ & & & R_{k+Nx} \end{bmatrix}$$

Control of the vehicle 100 may be optimised by determining a solution of:

$$\frac{dJ_k}{dU'} = 0 \Rightarrow U' = f(Z, N, Q, R, X(k), Xd)$$

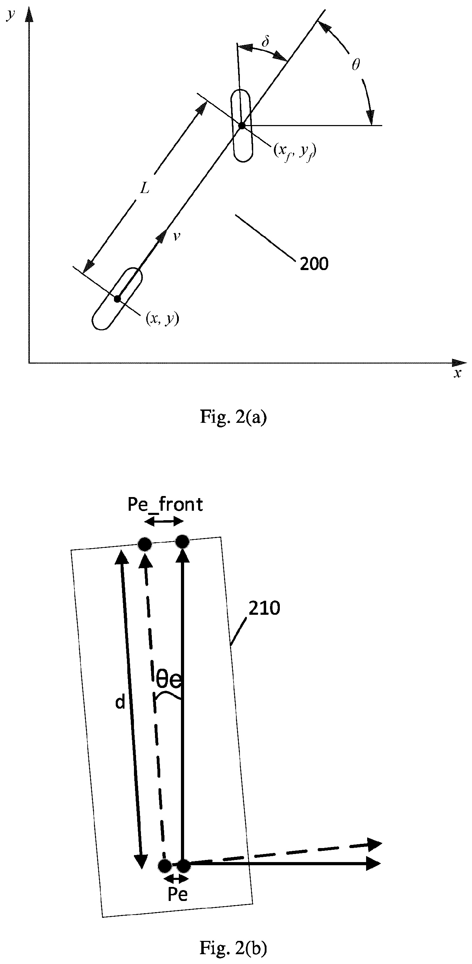

In order to determine the control inputs $U$ to the vehicle 100, such as using the MPC control scheme, it is necessary to have a model of the vehicle 100. Notwithstanding a number of wheels of the vehicle, the vehicle 100 may be modelled as a kinematic bicycle model 200. An illustration of such a model is illustrated in Figure 2. The bicycle model 200 according to an embodiment of the invention is defined by $L$ which is a wheelbase of the bicycle i.e. length, $\delta$ is a steering angle, $\theta$ is heading, $v$ is velocity $x$, $y$ and $x_f$, $y_f$ are coordinates for a position of rear and front wheels, respectively, and $T$ is a sample time. It will be appreciated that other models, including other vehicle models, may be used and embodiments of the present invention are not limited to use of this model.

Combining the MPC scheme with the example bicycle model 200, for a position in x, y coordinates and heading $\theta$ gives:

$$\begin{cases} \dot{x} = v\cos(\theta) \\ \dot{y} = v\sin(\theta) \\ \dot{\theta} = v/L \tan(\delta) \end{cases} \Rightarrow \begin{cases} x(k+1) = x(k) + (T\cos(\theta(k)) \cdot v(k) \\ y(k+1) = y(k) + (T\sin(\theta(k)) \cdot v(k) \\ \theta(k+1) = \theta(k) + \dfrac{T}{L} \cdot (v(k) \cdot \tan(\delta(k))) \end{cases}$$

Where the left hand side shows a continuous time representation and the right hand side is a discrete time representation.

In state space form this gives:

$$\begin{bmatrix} x(k+1) \\ y(k+1) \\ \theta(k+1) \end{bmatrix} = \begin{bmatrix} x(k) \\ y(k) \\ \theta(k) \end{bmatrix} + \begin{bmatrix} T\cos(\theta(k) & 0 \\ T\sin(\theta(k) & 0 \\ 0 & \dfrac{T}{L} \end{bmatrix} \cdot \begin{bmatrix} v \\ v \cdot \tan(\delta) \end{bmatrix}$$

As can be appreciated from the above, the velocity of the vehicle, represented by $v$, is influential in terms of the above representations. In particular, it can be observed that when the velocity of the vehicle is low i.e. the value of $v$ is low, particularly approaching 0, problems may arise. This is because, as velocity reduces, the value of $v$ in the above equation tends to 0 and accurate measurement of the current state of the vehicle becomes increasingly difficult. In particular, accurate estimation of one or more of position ($x$, $y$) and heading of the vehicle becomes increasingly influential, such that noise or errors present in these measurements increases in significance.

The above problem can be further explained in that instantaneous longitudinal motion of a vehicle is independent of an angle of steered wheels of the vehicle, whereas instantaneous rotation motion depends on the longitudinal actuation (velocity of the vehicle $v$) and lateral actuation (steered angle of wheels). A vehicle cannot rotate, no matter what the angle of its steered wheels, if it is not moving ($v$=0), and for the same wheel position, the rotation will be faster as the vehicle moves faster longitudinally. This is observable in the kinematic bicycle model of Figure 2 with:

$$\begin{cases} \dot{x} = v\cos(\theta) \\ \dot{y} = v\sin(\theta) \\ \dot{\theta} = v/L \tan(\delta) \end{cases}$$

$L$ = Wheelbase
$v$ = velocity
$\delta$ = Wheel angle

Therefore, any control applied to the motion of the vehicle has to implicitly solve the described actuation coupling. In particular, for the bicycle model of Figure 2, it is necessary to solve the equation below in order to find the steering action required.

$$u= v \tan(\delta) \rightarrow \tan(\delta)=\frac{u}{v}$$

It can be observed from the equation above that when a vehicle has to be accurately controlled to a stationary position, a singularity is created as velocity tends to 0 i.e. a division by 0 is undefined or infinity.

Another problem has also been noted with existing control schemes. Existing control schemes control a positional state of the vehicle with respect to a single point reference or datum position of the vehicle, which is typically associated with one of the vehicle's axles, such as a rear axle of the vehicle. It will be appreciated that the reference position may alternatively be located a centre of mass of the vehicle, a centre of a front axle of the vehicle etc. In view of errors such as associated with sensors associated with determining the position of the vehicle, i.e. via GPS for example, and controllers associated with the vehicle, position errors exist for other points of the vehicle. Particularly for large vehicles, such as having a relatively long wheelbase, for example although not exclusively SUVs, commercial vehicles etc., a positional accuracy of another point of the vehicle may not be achievable with a single point control system.

Figure 2(b) illustrates a front-wheel steered vehicle 210 having an example length $d$=4m. A positional error ($Pe$) is illustrated at a control point corresponding to a centre of a rear axle, for example. A heading error $\theta e$ is also illustrated. For a heading error of 3° and positional error of 2cm at the control point, the positional error at the front bumper of the vehicle is given by:

$$Pe\_front = d \sin(\theta e) + Pe \approx 23\,cm$$

Thus it can be appreciated that, particularly for a long vehicle, even with very small errors in position and heading for the single control point of the vehicle 210, a relatively large position error may exist at another point of the vehicle 210.

In embodiments of the invention, vehicle movement is modelled based upon a velocity of each wheel of an axle of the vehicle. Thus a model of the vehicle is determined in embodiments of the invention utilising a speed of movement of each side of the vehicle, in particular each longitudinal end of an axle of the vehicle. The speed of movement of each longitudinal end of the axle of the vehicle corresponds, in some embodiments, to a wheel speed of a wheel located at each respective end of the axle. Advantageously a control solution determined in dependence on such a model is not dependent on a velocity of the vehicle, as discussed above, and therefore improved control at low speeds of the vehicle may be obtained.

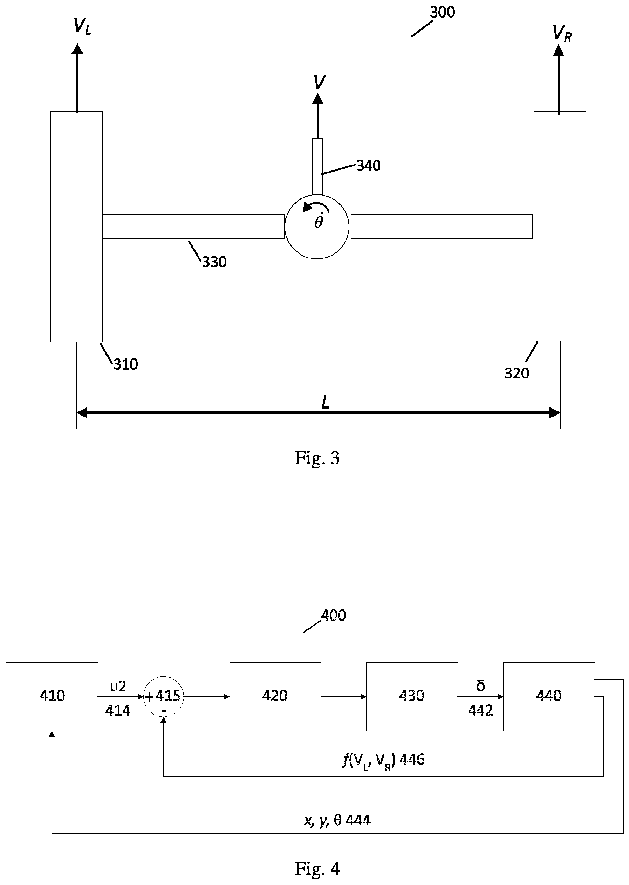

Figure 3 illustrates a vehicle axle 300. In the example of Figure 3 the axle 300 is a rear axle of the vehicle, although it will be appreciated that a front or intermediate axle may be considered. The rear axle 300 is associated with a first wheel 310 and a second wheel 320 which are disposed at respective ends of an axle body 330 through which, for a driven axle, torque is communicated to the wheels 310, 320. The first wheel 310 represents a first lateral side of the vehicle and the second wheel 320 represents a second lateral side of the vehicle. A driveshaft 340 is partially shown extending forward at a centre of the axle 300. The first wheel is 310 is a left-hand wheel and the second wheel 320 is a right-hand wheel. A length between each of the wheels, or track, is denoted by $L$. $V_L$ is a velocity of the first wheel 310 and $V_R$ is a velocity of the second wheel 320. $V$ is a velocity of the axle and $\dot{\theta}$ is a change in heading over time. Given the velocity of each wheel 310, 320 of the axle 300 can be conveniently measured by wheel speed sensors, $\dot{\theta}$ and $\dot{x}$, $\dot{y}$ being a change in position can be given by:

$$\begin{cases} \dot{x} = \dfrac{V_R + V_L}{2}\cos(\theta) \\ \dot{y} = \dfrac{V_R + V_L}{2}\sin(\theta) \\ \dot{\theta} = \dfrac{V_R - V_L}{L} \end{cases} \Rightarrow \begin{cases} x(k+1) = x(k) + (T\cos(\theta(k)) \cdot u1(k) \\ y(k+1) = y(k) + (T\sin(\theta(k)) \cdot u1(k) \\ \theta(k+1) = \theta(k) + \dfrac{T}{L} \cdot u2(k) \end{cases}$$

$$u1 = V = \frac{V_R + V_L}{2}$$

$$u2 = \frac{V_R - V_L}{L}$$

The left hand side is continuous time representation and the right hand side is a discrete time representation. As explained above, k indicates a current state and $k+1$ a first future state. As can be appreciated, this model is similar to the kinematic bicycle model of Figure 2 described above. Thus, a solution for motion control can be similarly applied as described above, but which advantageously does not require solving by an inverse of velocity.

Using the above model, a control solution according to an embodiment of the invention is defined. The control solution determines an individual speed of each wheel at either end an axle of the vehicle i.e. a speed of each of the first and second wheels 310, 320 shown in Figure 3 i.e. $V_L$ and $V_R$. However, it will be appreciated that for most vehicles i.e. those with steered wheels, the speed of each wheel is not directly controlled to steer the vehicle. Instead, wheel angle, i.e. a steering wheel angle (angle of steered wheels of the vehicle), and longitudinal force applied by one or more of an engine, electric machine(s) and brakes is controlled. Thus it is necessary to convert individual wheel speeds into the magnitudes available in said actuation i.e. steering wheel angle and longitudinal force.

Figure 4 illustrates a control scheme 400 for a vehicle according to an embodiment of the invention. The control scheme is for wheel angle (u2) for one axle of the vehicle, such as illustrated in Figure 3. The control scheme illustrated in Figure 4 does not include control of velocity (u1) of the vehicle as velocity control does not suffer from the problem mentioned above. The control scheme illustrated in Figure 4 is a model predictive control (MPC) control scheme. However it will be appreciated that embodiments of the invention are not restricted to the MPC control scheme. Embodiments of the invention are applicable to any control scheme having a dependence on velocity, such as a control scheme requiring solution to vtan(delta) or similar.

The control scheme 400 illustrated in Figure 4 comprises a MPC module 410, a summation node 415, a control module 420, a conversion module 430 and the vehicle is represented as 440. The vehicle 400 is provided with a control input 442 indicative of wheel angle δ i.e. a desired or requested angle of the steering wheels of the vehicle. The wheel angle δ is a desired wheel angle indicated by the control input. The vehicle 440 provides, from one or more sensors associated therewith, state data 444, 446 which is indicative of a current state of the vehicle 440. The state data 444 is indicative of the current state of the vehicle and in the embodiment shown comprises a location or position 444 of the vehicle (x, y) and an orientation of the vehicle θ. The state data 444 is provided to the MPC module 410, as shown. The vehicle 400 further provides velocity data 446 which, in the illustrated embodiment, is indicative of a velocity of each lateral side of the vehicle 440 i.e. $V_L$, $V_R$. The velocity data 446 may be determined from respective wheel speed sensors associated with wheels of one or more axles of the vehicle 440. The embodiment of Figure 4 is a control scheme for controlling one axle of the vehicle 440, which may be a front axle. Thus the wheel speed of a wheel at either end of the axle is indicated by the velocity data 446. The velocity data 446 may be a function of speeds of first and second wheels 310, 320 associated with an axle 300 of the vehicle 440 i.e. $f(V_L, V_R)$. As will be explained, the velocity data 446 is provided to the summation node 415, in the illustrated embodiment to a subtraction input of the summation node 415.

The MPC module 410 is arranged to receive the state data 444 indicative of the current state of the vehicle 440. The MPC module 410 is arranged to access a memory storing data indicative of a model of the vehicle 440 according to an embodiment of the invention. The MPC module 410 utilises the model, as described above, to predict a plurality of future states of the vehicle i.e. at time $k+1$, $k+2$ etc. As noted above, the model described above avoids problems associated with low velocities of the vehicle 440 by being based upon the speed of movement of each side of the vehicle 440 i.e. wheel speeds of laterally-spaced wheels of the vehicle 440. The MPC module 410 is arranged to determine a control input 442 for the vehicle 440. In the illustrated embodiment, dependent upon a desired trajectory of the vehicle and the predictions of the future states of the vehicle, the MPC module 410 is arranged to determine the control input $U$ for the vehicle 440 by optimising a cost function $J$ as described above. A control output 414 from the MPC module 410 is provided as u2 as shown in Figure 4.

The control input 414 is provided from the MPC module 410 for controlling the speed of each lateral side of the vehicle 440. The control input 414 may be indicative of a desired wheel speed $V_L$, $V_R$ of the wheels 310, 320 of the axle 300 of the vehicle 440 as illustrated in Figure 3. In Figure 4, the control input provided by the MPC module 410 u2 is indicative of a differential speed of wheels 310, 320 at each side of the axle, and a length of the axle $L$, as noted above. The determined control input 414 may be of the form:

$$u2 = \frac{V_R - V_L}{L}$$

The summation node 415 receives the control input 414 from the MPC module 410. The summation node 415 receives an input 446 indicative of a measured velocity of the respective sides of the vehicle 440. The input 446 indicative of the measured velocity of the respective sides of the vehicle 440 is, in the illustrated embodiment, the velocity data 446 indicative of a wheel speed of the wheels 310, 320 at each end of the axle i.e. the right and left wheels $V_L$, $V_R$. The velocity data 446 received by the summation node 415 may be a function of the respective wheel speeds i.e. $f(V_L, V_R)$. The summation node 415 is arranged, in one embodiment, to determine an error e between the inputs 414, 446 i.e. to determine the error e between the control input 414 received from the MPC module 410 and the current wheel speeds 446. Data indicative of the error e is provided to the control module 420.

The control module 420, in embodiments of the invention, provides actuation agnostic control. That is, the control module 420 operates independent of a means by which actuation of the controlled one or more variables is achieved. In some embodiments of the invention, the control module 420 is arranged to provide proportional integral differentiation (PID) control. An output of the control module 420 may be indicative of a wheel speed of the wheels of the vehicle. The control module 420 is arranged to receive, as an input, the data indicative of the error e from the summation node 415 which, in the illustrated embodiment, is indicative of an error in the speed of each lateral side of the vehicle 440 i.e. wheel speed error in some embodiments of the invention.

As mentioned above, since for most vehicles wheel speed is not the actuated variable for control of heading or steering of the vehicle 440 i.e. the output of the control module 420 does not directly represent the available actuation of the vehicle, the output of the control module 420 requires conversion to the available actuation of the vehicle 440, which in the illustrated embodiment is steering wheel angle. The conversion module 430 may provide conversion according to one of:

$$v. \sin (\delta) \text{ or } v. tan(\delta)$$

A selection between the above to equations is made dependent on the axle of the vehicle which is being steered i.e. *v. sin* may be used with a front axle, whereas *v. tan* may be used with a rear axle of the vehicle.

The model utilised with the control scheme illustrated in Figure 4 only considers a two wheeled (single axle) vehicle i.e. having left and right wheels, as in Figure 3. Therefore, according to the model used in the MPC module 410, the vehicle is able to rotate with a centre of the axle 300 longitudinally static i.e. without forward motion. For a three, four or more wheeled vehicle, such rotation without motion is not achievable. Therefore the control strategy may be restrained in some embodiments by one or both limitations:

$$V_R.V_L > 0$$

The above requirement is for both wheel velocities to have the same sign i.e. positive or negative, and:

$$\min (|V_R|, | V_L|) > min \, Vwheel(f(veh\_\max \_radius))$$

The above equation expresses that most vehicles have a different turning radius which defines a minimum wheel speed of the vehicle when turning.

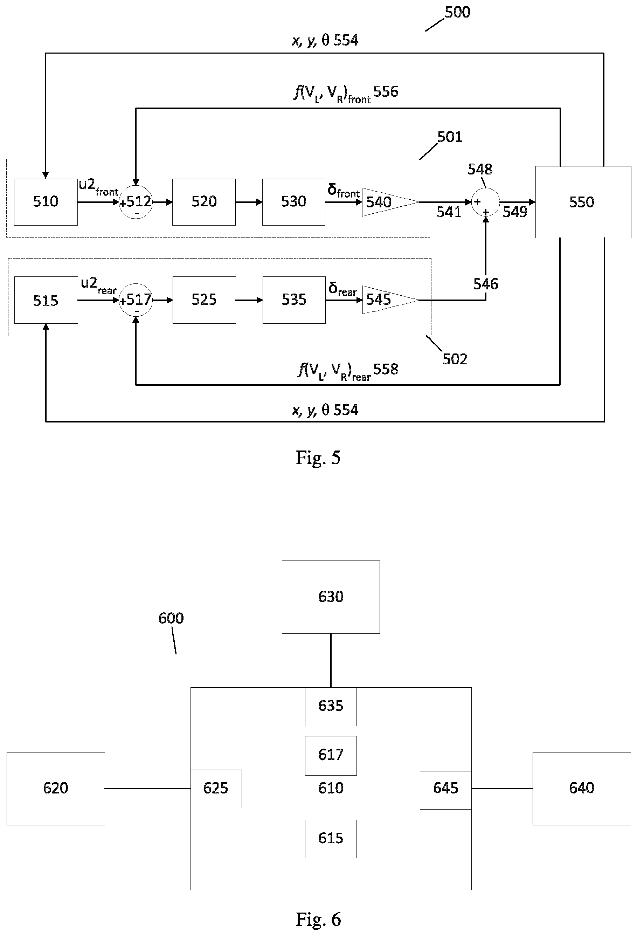

Figure 5 illustrates a control scheme 500 for a vehicle according to another embodiment of the invention. The control scheme 500 is for a vehicle 550 having at least two axles. In particular, the embodiment of Figure 5 is for control of steering wheel angle with control of two axles of the vehicle 550, although it will be appreciated that this is not limiting i.e. more than two axles may be controlled. The two axles in Figure 5 are referred to as front and rear axles of the vehicle where a speed of wheels associated with the two axles is controlled. In particular, in one embodiment a differential speed of the wheels of the two axles is controlled i.e. u2$_{front}$ and u2$_{rear}$. As with the embodiment illustrated in Figure 4, it will be appreciated that embodiments of the invention are not restricted to the MPC control scheme.

The control scheme 500 of Figure 5 comprises a respective set of operations 510, 512, 515, 517, 520, 525, 530, 535, 540 545 associated with each axle of the vehicle 550. In the illustrated embodiment, the control scheme comprises a first set 501 of operations associated a first axle and a second set 502 of operations associated with a second axle. The first set 501 of operations providing a control input based on the first axle and the second set 502 of operations provides a control input based on controlling the second axle. An output of each of the plurality of sets of operations 501, 520 are combined at a combining node 548 to provide a control input 549 for the vehicle 550, as in the embodiment described above with respect to Figure 4.

For each of the plurality of axles of the vehicle 550, the control scheme 500 comprises a MPC module 510, 515, a summation node 512, 517, a control module 520 525, a conversion module 530, 535 and a proportioning module 540, 545 which each produce a respective control input 541, 546 for the respective axle. That is, the control scheme of Figure 5, which is arranged to control two axles of the vehicle 550, includes two of each of the aforesaid modules divided amongst the first and second sets 501, 502 of operations.

Each of the MPC module 510, 515, summation node 512, 517, control module 520 525 and conversion module 530, 535 operate as described with respect to Figure 4. In Figure 5, the conversion modules 530, 535 are each arranged to provide a conversion for the respective axle of the vehicle 550. In the illustrated embodiment the conversion module 540 provides conversion for the front axle, which may be *v*. sin ($\delta$) to provide $\delta_{front}$ indicative of wheel angle for the front axle, whilst the conversion module 545 provides conversion for the rear axle, which may be *v. tan*($\delta$) to provide $\delta_{rear}$ indicative of wheel angle for the rear axle.

The proportioning module 540, 545 associated with each axle is arranged to receive the signal indicative of steering wheel angle for the respective axle i.e. $\delta_{front}$ or $\delta_{rear}$ and to determine a respective proportion of the combined control signal 549 for that axle. In some embodiments, the proportioning module for one axle, such as the proportioning module 540 for the front axle, may apply to an input $k_{front}$ as a value from 0 to 1, whilst the other proportioning module, such as the proportioning module 545 for the rear axle applies 1-$k_{front}$. In this way, the respective signals may be combined at the combining module 548 in appropriate proportions.

The control scheme comprises a combining module 548 which is arranged to receive the control input 541, 546 for each axle of the vehicle and to combine the control inputs to form a combined control input 549 for the vehicle as will be explained. In the control scheme of Figure 5 the combining module is a summation module 548 arranged to sum each of the respective control inputs 541, 546. The vehicle is represented in Figure 5 as 550. The vehicle 550 is provided with a control input 442, which as in Figure 4 is indicative steering wheel angle $\delta$ for the vehicle 550.

The vehicle 550 provides, from one or more sensors associated therewith, state data 554 which is indicative of a current state of the vehicle 554. The state data 442 indicative of the current state of the vehicle 550 in the embodiment shown comprises a location or position of the vehicle $(x, y)$ and an orientation of the vehicle $\theta$. The state data 554 is provided to each the MPC modules 510, 515 as shown. That is, the same state data is provided to the plurality of MPC modules 510, 515 of the control scheme. The vehicle 550 further provides velocity data 556, 558 indicative of a velocity of each lateral side of the vehicle 440 i.e. $V_L$, $V_R$ for each axle of the vehicle 550. The velocity data 556, 558 may be determined from respective wheel speed sensors associated with wheels of each axle of the vehicle 440. The velocity data 556, 558 may be a function of speeds of first and second wheels 310, 320 associated with each axle 300 of the vehicle 550 i.e. $f(V_L, V_R)$. In the scheme of Figure 5, first velocity data 556 associated with a first axle i.e. the front axle is provided to summation node 512, whilst second velocity data 558 associated with a second axle i.e. the rear axle is provided to summation node 517. Thus each summation node 512, 517 is provided with velocity data 556, 558 for the respective axle under control.

Figure 6 illustrates a system 600 according to an embodiment of the invention. The system 600 may be implemented by one or more electronic controllers. The system 600 comprises a control means 610 according to an embodiment of the invention, current state determining means 620 for determining one or more parameters of a current state of the vehicle, desired state determining means 630 and vehicle control means 640. The desired state determining means 630 may be used with embodiments using an MPC control scheme, although may not be present in other embodiments.

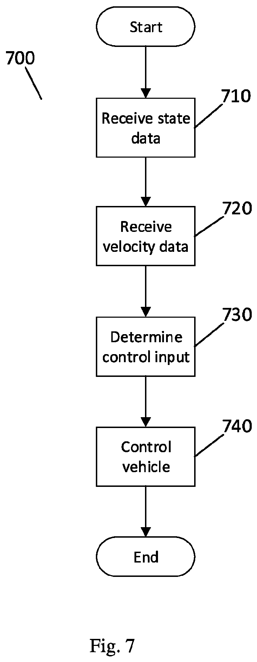

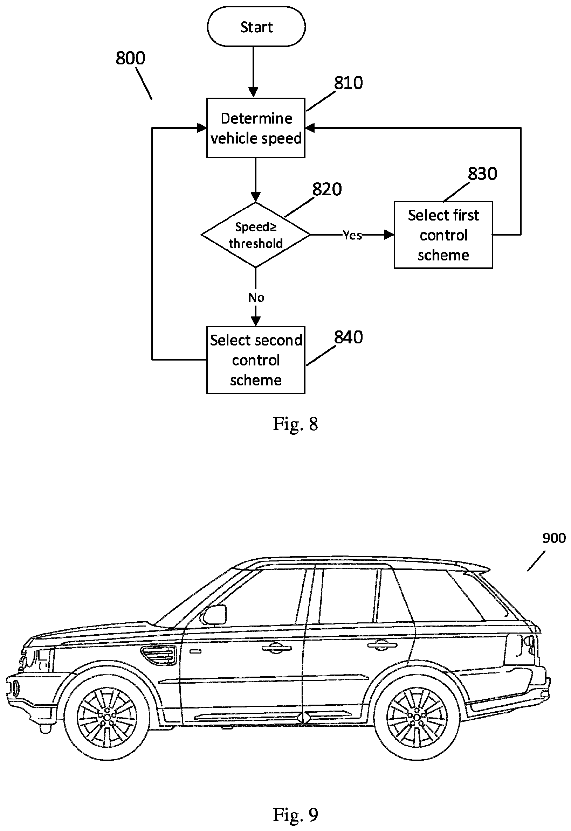

The control means 610 may comprise electronic circuitry. The control means may be a controller 610 according to an embodiment of the invention. The control means 610 may comprise one or more electronic processing devices 615, or processors, which operably execute computer-readable instructions. The computer-readable instructions may be stored in a memory 617 accessible to the one or more electronic processing devices 615. The computer readable instructions may, when executed, cause the one or more electronic processing devices 615 to implement a control scheme 400, 500 according to an embodiment of the invention such as one of those 400, 500 illustrated in Figure 4 or 5. The computer-readable instructions may cause the processing device 615 to perform a method 700, 800 according to an embodiment of the invention, such as one of those illustrated in Figure 7 or 8 to provide such the control scheme 400, 500 for a vehicle. The control means 610 comprises input means 625 to receive a signal indicative of the current state of the vehicle 100. The signal may be an electronic signal which is indicative of current state data. The current state data may be provided by the current state determining means 620. The control means 610 may comprise input means 635 to receive a signal indicative of the desired state of the vehicle 100. The signal may be an electronic signal which is indicative of desired state data. The desired state data may be provided by the desired state determining means 630. The control means 610 comprises output means 645 to output a signal indicative of one or more control inputs which are provided to the vehicle 100. The signal may be an electronic signal, hereinafter vehicle control signal, which is indicative of the one or more vehicle control inputs, $U$. The control signal may be provided to the vehicle control means 640.

The current state determining means (CSDM) 620 is arranged to, in use, determine one or more parameters of the current state of the vehicle 100. The CSDM 620 may comprise one or a plurality of devices for determining each respective parameters of the current state. The CSDM 620 may comprise a magnetometer device for determining a current heading of the vehicle 100. The current state determining means 620 may comprise a location determining device which may comprise a receiver for receiving wireless navigation signals, such as from GPS or GLONASS satellites, from which the location of the vehicle may be determined. The CSDM 620 may comprise other devices such as an altimeter device for determining an altitude of the vehicle 100, one or more scanning devices for scanning i.e. transmitting and receiving radiation from an environment of the vehicle 100, such as LIDAR. The CSDM 620 may comprise imaging means, such as one or more imaging devices, for outputting image data corresponding to the environment of the vehicle 100, such as one or more cameras. Other devices may be envisaged which are useful for determining parameters of the vehicle's current state. The CSDM 620 may output the current state data, $X(k)$, indicative of the one or more parameters of the vehicle's current state. The current state data may be indicative of the vehicle's position or location and the vehicle's current heading. The CSDM 620 may comprise a wheel sensor associated with each of one or more wheels of the vehicle to provide wheel speed data indicative of the respective wheel's rotational speed.

The desired state determining means (DSDM) 630 may comprise electronic circuitry. The DSDM 610 may comprise one or more electronic processing devices, or processors, which operably execute computer-readable instructions. The computer-readable instructions may be stored in a memory accessible to the one or more electronic processing devices. The computer readable instructions may, when executed, cause the one or more electronic processing devices to determine the desired state of the vehicle 100. The desired state may be, for example, a position along a navigable path or within a navigable area, such as a road, or a parked position of the vehicle 100. Other desired states of the vehicle may be envisaged. The DSDM 630 may be provided with the current state data from the current state determining means 620. The DSDM 630 may be arranged to access digital map data, such as stored in a storage means accessible to the DSDM 630, indicative of a layout or geometry of the navigable path from which the desired state may be determined. The DSDM 630 may, for example, receive image data provided by the current state determining means 620 in order to determine a parked location of the vehicle relative to one or more obstacles in the environment of the vehicle 100, such as other parked vehicles. The DSDM 630 provides the desired state data, $Xd$, to the control means 610.

The vehicle control means (VCM) 640 is provided, as an input, with the vehicle control signal from the control means 610. The control signal may be signal 442 in Figure 4 or signal 549 in Figure 5 indicative of a desired steering wheel angle of the vehicle 440, 550. The VCM 640 comprises means for controlling the state of the vehicle 100, which in the illustrated embodiment is means for controlling a steering wheel angle. The VCM 640 may be arranged to influence, or control, the one or more parameters of the vehicle's state determined by the CSDM 620. Thus the VCM 640 may comprise a steering controller of the vehicle. The steering controller may be associated with one or more actuators arranged to move a steering system of the vehicle. For example, the actuators may comprise one or electric motors or hydraulic actuators associated with a steering system of the vehicle 440, 550.

Figure 7 illustrates a control method 700 according to an embodiment of the invention. The control method 700 is for controlling a vehicle according to an embodiment of the invention. In particular, the method 700 is for controlling the steering of the vehicle.

The method 700 comprises a step 710 of receiving state data 444, 554 associated with the vehicle. As described above in connection with Figures 4 and 5, the state data 444 is indicative of the current state of the vehicle. The state data 444, 554 may comprise a location or position of the vehicle $(x, y)$ and an orientation of the vehicle $\theta$. The state data may be output by the CSDM 620 of the system 600 illustrated in Figure 6, and received by the controller 610 at the input means 625.

The method 700 comprises a step 720 of receiving velocity data 446, 556, 558 associated with the vehicle. As described above in connection with Figures 4 and 5, the velocity data 446, 556, 558 is indicative of a velocity of each lateral side of the vehicle 440 i.e. $V_L$, $V_R$ for one or more axles of the vehicle 440, 550. When the method 700 implements the control scheme 400 of Figure 4, the velocity data 446 may comprise velocity data associated with one axle of the vehicle 440, such as the front axle. When the method 700 implements the control scheme of Figure 5, the velocity data 556, 558 is associated with each of a plurality of axles of the vehicle 550, such as front and rear axles of the vehicle 550. The velocity data 446, 556, 558 may be output by the CSDM 620 of the system 600 illustrated in Figure 6, and received by the controller 610 at the input means 625. The velocity data 446, 556, 558 may be output from one or more wheel speed sensors associated with a plurality of wheels of the vehicle 440, 550.

The method 700 comprises a step 730 of determining a control input for the vehicle. In embodiments of the invention, the control input is indicative of a steering wheel angle for the vehicle 440, 550 i.e. an angle of the steering wheels of the vehicle. Step 730 according to an embodiment of the invention is performed in dependence on the state data 444, 554 received in step 710 and the velocity data 446, 556, 558 received in step 720. Step 730 utilises the model indicative of movement of the vehicle in dependence on a respective velocity of each of the first and second lateral sides of the vehicle 440, 550 accessible to the processing device 615 of the controller 610 as discussed above. In step 730 one of the control schemes 400, 500 described above may be performed to determine the control input 442, 549 indicative of steering wheel angle for the respective vehicle 440, 550. The reader is directed to the explanations of the control schemes 400, 500 described above, where the modules of said control schemes 400, 500 represent processing steps performed as part of step 730.

Step 740 comprises controlling the vehicle 440, 550 according to the control input determined in step 730. That is, the vehicle 440, 550 is controlled by setting the steering wheel angle i.e. the angle of the one or more steering wheels of the vehicle, or other means for steering the vehicle such as a rudder, according to the control input. Step 740 may comprise outputting one or more signals indicative of the control input from the output means 645 of the controller. One or more actuators of the vehicle 440, 550 may be controlled to adopt a position according the control input. Step 740 may comprise the VCM 640 of Figure 6 receiving the one or more signals and controlling the state of the vehicle in dependence thereon i.e. adjusting or controlling an angle of the steering wheels of the vehicle.

Embodiments of the present invention provide apparatus and methods for controlling a vehicle and, in particular, for controlling steering of a vehicle. Embodiments of the present invention are particularly useful for controlling the vehicle at low speeds.

Figure 8 illustrates a method 800 according to another embodiment of the invention. The method is a method 800 of controlling a vehicle according to another embodiment of the invention. In particular, the method 800 is a method of selecting a control scheme to control the vehicle.

Step 810 of the method 800 comprises determining a speed of the vehicle. The speed of the vehicle is a current i.e. instantaneous speed of the vehicle. The speed may be a speed of the vehicle over ground or over water, or an airspeed of the vehicle.

Step 820 comprises determining whether the speed of the vehicle is above or equal to a predetermined threshold. The predetermined threshold is a threshold speed, such as 30 kmh$^{-1}$, 20kmh$^{-1}$, 10kmh$^{-1}$ although it will be appreciated that other threshold speeds may be chosen. If, in step 820, the vehicle is travelling above or is equal to the threshold speed, the method moves to step 830. If the vehicle is travelling at a speed below the threshold speed the method moves to step 840.

In step 830 a first control scheme is chosen for controlling the vehicle. In particular, the control scheme is a control scheme comprising control of the vehicle's steering. The first control scheme may be one in which the velocity of the vehicle, $v$, is used as either a numerator or denominator of an equation term, such as:

$$v$$
$$v \cdot \tan(\delta)$$

As explained above, such control schemes are advantageously used when the speed of the vehicle is relatively high i.e. above the predetermined threshold.

If, however, the speed of the vehicle is below the threshold speed and the method 800 progresses to step 840, a second control scheme is selected. The second control scheme is one according to an embodiment of the present invention, such as that illustrated in Figure 4 or 5 which may be implemented by the system of Figure 6 according to the method shown in Figure 7. In the second control scheme a control input for the vehicle is determined in dependence on state data and velocity data utilising on a model indicative of movement of the vehicle in dependence on a respective velocity of each of the first and second lateral sides of the vehicle as explained above. Advantageously, use of such a second control improves control of the vehicle at lower speeds.

Step 850 comprises controlling the vehicle according to the selected control scheme.

Figure 9 illustrates a vehicle 900 according to an embodiment of the invention. The vehicle 900 is a wheeled vehicle. The vehicle comprises a system 600 according to an embodiment of the invention such as illustrated in Figure 6. The vehicle 900 may be arranged to perform a method 700 according to an embodiment of the invention. The vehicle implements a control scheme according to an embodiment of the invention, such as that illustrated in Figure 4 or 5.

It will be appreciated that various changes and modifications can be made to the present invention without departing from the scope of the present invention, as defined by the appended claims.

**Claims**

1. A control system comprising one or more controllers, the control system comprising:

   input means (625) to receive state data (554) indicative of a current state of a vehicle and velocity data (556, 558) indicative of a determined respective velocity of each of first and second lateral sides (310, 320) of the vehicle at respective first and second positions along a longitudinal axis of the vehicle;
   memory means (617) storing data indicative of a first model and a second model associated with the vehicle;
   processing means (615) configured to determine a control input for the vehicle in dependence on the state data (554) and the velocity data (556, 558), wherein the processing means (615) is configured to determine the control input (549) for the vehicle in dependence on the velocity data (556, 558) utilising the first model, which is indicative of movement of the vehicle in dependence on a respective velocity of each of the first and second lateral sides of the vehicle at the first position along the longitudinal axis, and the second model which is indicative of movement of the vehicle in dependence on a respective velocity of each of the first and second lateral sides of the vehicle at the second position along the longitudinal axis; and
   output means (645) arranged to output one or more signals indicative of the control input (549) for controlling the vehicle.

2. The control system of claim 1, wherein the processing means (615) is arranged to perform a conversion operation on the control input (549) to determine an actuation control input indicative of a state of one or more control actuators associated with the vehicle as the control input.

3. The control system of claim 2, wherein the actuation control input for the vehicle is arranged to control a steering angle of the vehicle.

4. The control system of any one of the preceding claims, wherein the processing means (615) is arranged to:

determine a first control input (541) utilising the first model indicative of movement of the vehicle in dependence on a respective velocity of each of the first and second lateral sides of the vehicle at the first position along the longitudinal axis;

determine a second control input (546) utilising the second model indicative of movement of the vehicle in dependence on a respective velocity of each of the first and second lateral sides of the vehicle at the second position along the longitudinal axis; and

combine the first and second control inputs to determine the control input (549) for the vehicle;

5. The control system of claim 4, wherein the combining of the first and second control inputs (541, 546) comprises determining a respective proportion for each control input.

6. The control system of any one of the preceding claims, wherein the first and second positions along the longitudinal axis correspond to first and second axles of the vehicle.

7. The control system of any one of the preceding claims, wherein the velocity of each of first and second lateral sides of the vehicle at first and second positions along a longitudinal axis of the vehicle corresponds to a speed of first and second wheels of the first and second axles of the vehicle.

8. A vehicle control system, comprising:

a control system (610) according to any preceding claim; and
one or more control means (640) for controlling the vehicle;
wherein the control means (640) is controlled in dependence on the control input (549) from the control system (610).

9. The vehicle control system of claim 8, wherein the control means (640) comprises one or more actuators for controlling a steering of the vehicle in dependence on the control input (549).

10. The vehicle control system of claim 8 or 9, comprising velocity determining means for determining velocity data indicative of a respective velocity of each of first and second lateral sides of the vehicle;

11. The vehicle control system of claim 10, the velocity determining means comprises first and second wheels speed sensors associated with first and second wheels of the vehicle.

12. The vehicle control system of any of claims 8 to 11, comprising state determining means (620) for determining a current state of the vehicle and providing state data indicative of the current state to the control system.

13. A vehicle comprising a control system according to any of claims 1 to 7 or the vehicle control system according to any of claims 8 to 12.

14. A method of controlling a vehicle, comprising:

receiving (710, 720) state data indicative of a current state of a vehicle and velocity data indicative of a determined respective velocity of each of first and second lateral sides of the vehicle at respective first and second positions along a longitudinal axis of the vehicle;
determining (730) a control input for the vehicle in dependence on the state data and the velocity data utilising the first model, which is indicative of movement of the vehicle in dependence on a respective velocity of each of the first and second lateral sides of the vehicle at the first position along the longitudinal axis, and the second model which is indicative of movement of the vehicle in dependence on a respective velocity of each of the first and second lateral sides of the vehicle at the second position along the longitudinal axis; and
controlling (740) the vehicle in dependence on the control input.

15. Computer software which, when executed by a computer, is arranged to perform a method according to claim 14; optionally the computer software is stored on a computer-readable medium.

# EP 4 200 177 B1

**Patentansprüche**

1. Steuersystem umfassend eine oder mehrere Steuerungen, das Steuersystem umfassend:

    ein Eingabemittel (625) zum Empfangen von Zustandsdaten (554), die einen aktuellen Zustand eines Fahrzeugs angeben, und Geschwindigkeitsdaten (556, 558), die eine bestimmte jeweilige Geschwindigkeit jeder der ersten und der zweiten lateralen Seite (310, 320) des Fahrzeugs an einer jeweiligen ersten und zweiten Position entlang einer Längsachse des Fahrzeugs angeben;
    ein Speichermittel (617) zum Speichern von Daten, die ein erstes und ein zweites Modell angeben, die mit dem Fahrzeug verknüpft sind;
    ein Verarbeitungsmittel (615), das konfiguriert ist, um eine Steuereingabe für das Fahrzeug in Abhängigkeit von den Zustandsdaten (554) und den Geschwindigkeitsdaten (556, 558) zu bestimmen, wobei das Verarbeitungsmittel (615) konfiguriert ist, um die Steuereingabe (549) für das Fahrzeug in Abhängigkeit von den Geschwindigkeitsdaten (556, 558) unter Verwendung des ersten Modells, das eine Bewegung des Fahrzeugs in Abhängigkeit von einer jeweiligen Geschwindigkeit von jeder der ersten und der zweiten lateralen Seite des Fahrzeugs an der ersten Position entlang der Längsachse angibt, und des zweiten Modells, das eine Bewegung des Fahrzeugs in Abhängigkeit von einer jeweiligen Geschwindigkeit von jeder der ersten und der zweiten lateralen Seite des Fahrzeugs an der zweiten Position entlang der Längsachse angibt, zu bestimmen; und
    ein Ausgabemittel (645), das eingerichtet ist, um ein oder mehrere Signale auszugeben, die die Steuereingabe (549) zum Steuern des Fahrzeugs angeben.

2. Steuersystem nach Anspruch 1, wobei das Verarbeitungsmittel (615) eingerichtet ist, um einen Umwandlungsvorgang an der Steuereingabe (549) durchzuführen, um eine Betätigungssteuereingabe zu bestimmen, die einen Zustand eines oder mehrerer Steueraktuatoren angibt, die mit dem Fahrzeug als die Steuereingabe verknüpft sind.

3. Steuersystem nach Anspruch 2, wobei die Betätigungssteuereingabe für das Fahrzeug eingerichtet ist, um einen Lenkwinkel des Fahrzeugs zu steuern.

4. Steuersystem nach einem der vorstehenden Ansprüche, wobei das Verarbeitungsmittel (615) eingerichtet ist zum:

    Bestimmen einer ersten Steuereingabe (541) unter Verwendung des ersten Modells, das die Bewegung des Fahrzeugs in Abhängigkeit von einer jeweiligen Geschwindigkeit von jeder der ersten und der zweiten lateralen Seite des Fahrzeugs an der ersten Position entlang der Längsachse angibt;
    Bestimmen einer zweiten Steuereingabe (546) unter Verwendung des zweiten Modells, das eine Bewegung des Fahrzeugs in Abhängigkeit von einer jeweiligen Geschwindigkeit von jeder der ersten und der zweiten lateralen Seite des Fahrzeugs an der zweiten Position entlang der Längsachse angibt; und
    Kombinieren der ersten und der zweiten Steuereingabe, um die Steuereingabe (549) für das Fahrzeug zu bestimmen;

5. Steuersystem nach Anspruch 4, wobei das Kombinieren der ersten und der zweiten Steuereingabe (541, 546) das Bestimmen eines jeweiligen Anteils für jede Steuereingabe umfasst.

6. Steuersystem nach einem der vorstehenden Ansprüche, wobei die erste und die zweite Position entlang der Längsachse der ersten und der zweiten Achse des Fahrzeugs entsprechen.

7. Steuersystem nach einem der vorstehenden Ansprüche, wobei die Geschwindigkeit der ersten und der zweiten lateralen Seite des Fahrzeugs an einer ersten und einer zweiten Position entlang einer Längsachse des Fahrzeugs einer Geschwindigkeit der ersten und zweiten Räder der ersten und der zweiten Achse des Fahrzeugs entspricht.

8. Fahrzeugsteuersystem umfassend:

    Steuersystem (610) nach einem der vorstehenden Ansprüche; und
    ein oder mehrere Steuermittel (640) zum Steuern des Fahrzeugs;
    wobei das Steuermittel (640) in Abhängigkeit von der Steuereingabe (549) von dem Steuersystem (610) gesteuert wird.

9. Fahrzeugsteuersystem nach Anspruch 8, wobei die Steuereinrichtung (640) einen oder mehrere Aktuatoren zum Steuern einer Lenkung des Fahrzeugs in Abhängigkeit von der Steuereingabe (549) umfasst.

10. Fahrzeugsteuersystem nach Anspruch 8 oder 9, umfassend ein Geschwindigkeitsbestimmungsmittel zum Bestimmen von Geschwindigkeitsdaten, die eine jeweilige Geschwindigkeit der ersten und der zweiten lateralen Seite des Fahrzeugs angeben;

11. Fahrzeugsteuersystem nach Anspruch 10, wobei das Geschwindigkeitsbestimmungsmittel Drehzahlsensoren für das erste und das zweite Rad umfasst, die mit dem ersten und dem zweiten Rad des Fahrzeugs verknüpft sind.

12. Fahrzeugsteuersystem nach einem der Ansprüche 8 bis 11, umfassend ein Zustandsbestimmungsmittel (620) zum Bestimmen eines aktuellen Zustands des Fahrzeugs und zum Bereitstellen von Zustandsdaten, die dem Steuersystem den aktuellen Zustand angeben.

13. Fahrzeug, umfassend ein Steuersystem nach einem der Ansprüche 1 bis 7 oder das Fahrzeugsteuersystem nach einem der Ansprüche 8 bis 12.

14. Verfahren zum Steuern eines Fahrzeugs, umfassend:

Empfangen (710, 720) von Zustandsdaten, die einen aktuellen Zustand eines Fahrzeugs angeben, und von Geschwindigkeitsdaten, die eine bestimmte jeweilige Geschwindigkeit von jeder der ersten und der zweiten lateralen Seiten des Fahrzeugs an einer jeweiligen ersten und zweiten Positionen entlang einer Längsachse des Fahrzeugs angeben;
Bestimmen (730) einer Steuereingabe für das Fahrzeug in Abhängigkeit von den Zustandsdaten und den Geschwindigkeitsdaten unter Verwendung des ersten Modells, das eine Bewegung des Fahrzeugs in Abhängigkeit von einer jeweiligen Geschwindigkeit von jeder der ersten und der zweiten lateralen Seite des Fahrzeugs an der ersten Position entlang der Längsachse angibt, und des zweiten Modells, das eine Bewegung des Fahrzeugs in Abhängigkeit von einer jeweiligen Geschwindigkeit von jeder der ersten und der zweiten lateralen Seite des Fahrzeugs an der zweiten Position entlang der Längsachse angibt; und
Steuern (740) des Fahrzeugs in Abhängigkeit von der Steuereingabe.

15. Computersoftware, die, wenn sie durch einen Computer ausgeführt wird, eingerichtet ist, um ein Verfahren nach Anspruch 14 durchzuführen; wobei optional die Computersoftware auf einem computerlesbaren Medium gespeichert ist.

## Revendications

1. Système de commande comprenant un ou plusieurs dispositifs de commande, le système de commande comprenant :

un moyen d'entrée (625) pour recevoir des données d'état (554) indiquant un état actuel d'un véhicule et des données de vitesse (556, 558) indiquant une vitesse respective déterminée de chacun de premier et second côtés latéraux (310, 320) du véhicule au niveau de première et seconde positions respectives le long d'un axe longitudinal du véhicule ;
un moyen de mémoire (617) stockant des données indiquant un premier modèle et un second modèle associés au véhicule ;
un moyen de traitement (615) configuré pour déterminer une entrée de commande pour le véhicule en dépendance des données d'état (554) et des données de vitesse (556, 558), dans lequel le moyen de traitement (615) est configuré pour déterminer l'entrée de commande (549) pour le véhicule en dépendance des données de vitesse (556, 558) à l'aide du premier modèle, qui indique le mouvement du véhicule en dépendance d'une vitesse respective de chacun des premier et second côtés latéraux du véhicule au niveau de la première position le long de l'axe longitudinal, et du second modèle qui indique le mouvement du véhicule en dépendance d'une vitesse respective de chacun des premier et second côtés latéraux du véhicule au niveau de la seconde position le long de l'axe longitudinal ; et
un moyen de sortie (645) agencé pour délivrer un ou plusieurs signaux indiquant l'entrée de commande (549) pour commander le véhicule.

2. Système de commande selon la revendication 1, dans lequel le moyen de traitement (615) est agencé pour effectuer une opération de conversion sur l'entrée de commande (549) pour déterminer une entrée de commande d'actionnement indiquant un état d'un ou plusieurs actionneurs de commande associés au véhicule en guise d'entrée de commande.

3. Système de commande selon la revendication 2, dans lequel l'entrée de commande d'actionnement pour le véhicule est agencé pour commander un angle de direction du véhicule.

4. Système de commande selon l'une quelconque des revendications précédentes, dans lequel le moyen de traitement (615) est agencé pour :

déterminer une première entrée de commande (541) à l'aide du premier modèle indiquant le mouvement du véhicule en dépendance d'une vitesse respective de chacun des premier et second côtés latéraux du véhicule au niveau de la première position le long de l'axe longitudinal ;
déterminer une seconde entrée de commande (546) à l'aide du second modèle indiquant le mouvement du véhicule en dépendance d'une vitesse respective de chacun des premier et second côtés latéraux du véhicule au niveau de la seconde position le long de l'axe longitudinal ; et
combiner les première et seconde entrées de commande pour déterminer l'entrée de commande (549) pour le véhicule ;

5. Système de commande selon la revendication 4, dans lequel la combinaison des première et seconde entrées de commande (541, 546) comprend la détermination d'une proportion respective pour chaque entrée de commande.

6. Système de commande selon l'une quelconque des revendications précédentes, dans lequel les première et seconde positions le long de l'axe longitudinal correspondent aux premier et second essieu du véhicule.

7. Système de commande selon l'une quelconque des revendications précédentes, dans lequel la vitesse de chacun des premier et second côtés latéraux du véhicule au niveau des première et seconde positions le long d'un axe longitudinal du véhicule correspond à une vitesse de première et seconde roues des premier et second essieux du véhicule.

8. Système de commande de véhicule comprenant :

un système de commande (610) selon l'une quelconque revendication précédente ; et un ou plusieurs moyens de commande (640) pour commander le véhicule ;
dans lequel le moyen de commande (640) est commandé en dépendance de l'entrée de commande (549) du système de commande (610).

9. Système de commande de véhicule selon la revendication 8, dans lequel le moyen de commande (640) comprend un ou plusieurs actionneurs pour commander une direction du véhicule en dépendance de l'entrée de commande (549).

10. Système de commande de véhicule selon la revendication 8 ou 9 comprenant un moyen de détermination de vitesse pour déterminer des données de vitesse indiquant une vitesse respective de chacun de premier et second côtés latéraux du véhicule ;

11. Système de commande de véhicule selon la revendication 10, le moyen de détermination de vitesse comprend des premier et second capteurs de vitesse de roues associés aux première et seconde roues du véhicule.

12. Système de commande de véhicule selon l'une quelconque des revendications 8 à 11, comprenant un moyen de détermination d'état (620) pour déterminer un état actuel du véhicule et fournir des données d'état indiquant l'état actuel au système de commande.

13. Véhicule comprenant un système de commande selon l'une quelconque des revendications 1 à 7 ou le système de commande de véhicule selon l'une quelconque des revendications 8 à 12.

14. Procédé de commande d'un véhicule comprenant :

la réception (710, 720) de données d'état indiquant un état actuel d'un véhicule et des données de vitesse indiquant une vitesse respective déterminée de chacun de premier et second côtés latéraux du véhicule au niveau de première et seconde positions respectives le long d'un axe longitudinal du véhicule ;
la détermination (730) d'une entrée de commande pour le véhicule en dépendance des données d'état et des données de vitesse à l'aide du premier modèle, qui indique le mouvement du véhicule en dépendance d'une vitesse respective de chacun des premier et second côtés latéraux du véhicule
au niveau de la première position le long de l'axe longitudinal, et du second modèle qui indique le mouvement du véhicule en dépendance d'une vitesse respective de chacun des premier et second côtés latéraux du véhicule au niveau de la seconde position le long de l'axe longitudinal ; et
la commande (740) du véhicule en dépendance de l'entrée de commande.

**15.** Logiciel d'ordinateur qui, lorsqu'il est exécuté par un ordinateur, est agencé pour effectuer un procédé selon la revendication 14 ; éventuellement, le logiciel d'ordinateur est stocké sur un support lisible par ordinateur.

Fig. 1

Fig. 2(a)

Fig. 2(b)

Fig. 3

Fig. 4

Fig. 5

Fig. 6

Fig. 7

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020143451 A1

- US 10407035 B1